# EUROPÄISCHE PATENTSCHRIFT

(11) **EP 2 679 787 B1**
(45) Veröffentlichungstag und Bekanntmachung des Hinweises auf die Patenterteilung: **18.02.2015**
(21) Anmeldenummer: 13001881.5
(22) Anmeldetag: 11.04.2013
(51) Int. Cl.: F02D 9/06, F02D 13/04, F01L 13/06, F02D 41/00, F02M 25/07, F02D 21/08

(54) **Verfahren und Vorrichtung zum Steuern einer Bremsklappe**
Method and device for controlling a brake valve
Procédé et dispositif destinés à la commande d'un volet de freinage

(30) Priorität: 28.06.2012 DE 102012012875
(43) Veröffentlichungstag der Anmeldung: 01.01.2014
(73) Patentinhaber: MAN Truck & Bus AG, 80995 München (DE)
(72) Erfinder: Berner, Armin, 91567 Herrieden (DE); Kraft, Florian, 90459 Nürnberg (DE); Röthlein, Bernhard, 90480 Nürnberg (DE)

(56) Entgegenhaltungen:
- EP-A1- 1 258 603
- EP-A1- 2 412 955
- WO-A1-02/18761
- US-A1- 2006 060 166
- US-A1- 2011 036 088

## Beschreibung

Die vorliegende Erfindung betrifft ein Verfahren zum Steuern zumindest einer Bremsklappe im Abgastrakt einer über zumindest einen Abgasturbolader aufgeladenen Brennkraftmaschine, insbesondere für Nutzkraftfahrzeuge, gemäß dem Oberbegriff des Patentanspruchs 1 sowie eine Vorrichtung zur Durchführung eines derartigen Verfahrens nach dem Oberbegriff des Anspruchs 9.

Bekanntlich lässt sich die Staudruck-Bremswirkung von Viertakt-Brennkraftmaschinen bei geschlossener Bremsklappe im Abgastrakt noch dadurch steigern, dass durch Zwischenöffnen der Auslassventile eine Dekompressions-Bremswirkung überlagert wird, die beispielsweise durch den ansteigenden Abgasgegendruck initiiert wird, mit Eingriff in die Ventilsteuerung der Brennkraftmaschine. Solche auch als EVB (exhaust valve break) bezeichnete Zusatzbremsvorrichtungen sind zum Beispiel in der EP 0 736 672 B1 und in der EP 1 526 257 A2 beschrieben. Durch die DE 10 2008 032 774 A1 ist dazu eine Lösung mit hydraulischem Eingriff in die Ventilsteuerung beschrieben, mittels der bei temporär zu hohem Abgasgegendruck verhindert werden soll, dass im befeuerten Betriebszustand der Brennkraftmaschine ein schädliches Ansprechen der EVB (Ventilspringen) erfolgen kann.

Bei Brennkraftmaschinen mit Abgasnachbehandlungsvorrichtungen wie Katalysatoren, Dieselpartikelfilter, etc. und zur definierten Beeinflussung des Verbrennungsablaufs in der Brennkraftmaschine werden Abgasrückführeinrichtungen mit teils hohen Abgasrückführraten verwendet. Die erzielbaren Rückführraten sind unter anderem abhängig von den Druckverhältnissen zwischen der Ladedruckseite der Brennkraftmaschine und der Abgasseite. Diese Druckverhältnisse können zum Beispiel durch eine steuerbare Drosselklappe in der Ladedruckleitung der Brennkraftmaschine mit beeinflusst werden.

WO 02/18761 A1 lehrt eine Vorrichtung und ein Verfahren zum Betrieb einer Motorabgasbremse zusammen mit einem Abgasrückführsystem. Durch Betätigung eines vor der Abgasturbine angeordneten Abgasbegrenzers kann die Abgasrückführrate des Abgasrückführsystems erhöht werden.

EP 1 258 603 A1 beschreibt eine Brennkraftmaschine in einem Fahrzeug mit einer eine Motorbremsklappe aufweisenden Motorbremsvorrichtung und einer Abgasrückführeinrichtung. Die Ansteuerung der Motorbremsklappe sieht wie folgt aus:
- während des Motorbremsbetriebes ist eine Abgasrückführung durch das AGR-Steuerorgan unterbindbar und die Motorbremsklappe in der Abgasleitung in eine Drosselposition einstellbar, und
- während der AGR-Betriebsphase sind sowohl das AGR-Steuerorgan als auch die Motorbremsklappe auf Durchlass geschaltet.

Aufgabe der Erfindung ist es, ein Verfahren und eine Vorrichtung aufzuzeigen, mittels dem bei einer turboaufgeladenen Brennkraftmaschine der gattungsgemäßen Art mit baulich einfachen Mitteln ein insbesondere für den instationären Einsatz verbesserter Betrieb der Brennkraftmaschine erzielbar ist.

Diese Aufgabe wird mit den Merkmalen der unabhängigen Patentansprüche gelöst. Vorteilhafte Weiterbildungen hierzu sind jeweils Gegenstand der darauf rückbezogenen Unteransprüche.

Erfindungsgemäß wird vorgeschlagen, dass die Bremsklappe im Abgastrakt auch im befeuerten Betrieb der Brennkraftmaschine zur definierten Erhöhung des Abgasgegendrucks in einer vorgegebenen Weise angesteuert wird, wobei der Abgasgegendruck stets unterhalb eines Schwellwerts gehalten wird, der ein Ansprechen der Zusatzbremsvorrichtung (EVB) ausschließt. Der erfindungsgemäße Vorschlag ermöglicht quasi ohne baulichen Mehraufwand eine gezielte und schnell reagierende Anhebung des Abgasgegendrucks im befeuerten Motorbetrieb auf Werte, die eine erhöhte Abgasrückführrate ermöglichen. Die Bremsklappe steuert somit im zumindest weitgehendst geschlossenem Zustand die Motorbremswirkung nebst EVB im Schubbetrieb und im befeuerten Motorbetrieb eine nur teilweise, die EVB nicht initiierende Druckerhöhung im Abgastrakt. Dadurch kann gegebenenfalls die vorstehend beschriebene Drosselklappe in der Ladedruckleitung entfallen und die Abgasrückführrate neben dem Abgasrückführventil nur durch die Modulation des Abgasgegendrucks gesteuert werden. Ferner kann mittels der Ansteuerung der Bremsklappe im befeuerten Betrieb der Brennkraftmaschine deren Aufheizverhalten im Kaltfahrbereich beschleunigt werden.

Die zumindest eine Bremsklappe kann besonders bevorzugt stromauf der Turbine des zumindest einen Abgasturboladers angeordnet werden, wodurch neben einem schnelleren Ansprechverhalten der Gegendrucksteuerung eine verbesserte Funktion der Abgasturbine erzielbar ist und diese von hohen Abgasgegendrücken entlastet wird.

In einer vorteilhaften, weiteren Ausgestaltung des Verfahrens kann stromauf der Bremsklappe ein Drucksensor im Abgastrakt vorgesehen werden, dessen Signale einem die Bremsklappe steuernden Steuergerät zugeführt werden. Der Drucksensor stellt eine präzise Druckerfassung und Überwachung sicher und kann so zuverlässig schädlichen Druckspitzen im instationären Motorbetrieb entgegenwirken.

Über den Drucksensor kann zudem in vorteilhafter Weise eine weitere Motorschutzfunktion gesteuert werden, indem bei zu hohem Abgasgegendruck trotz voll geöffneter Bremsklappe eine Reduzierung des Ladedrucks und/oder eine Reduzierung der Kraftstoff-Einspritzmenge gesteuert wird, die wiederum zu einer schnellen Druckabsenkung im Abgastrakt führt.

Das Weiteren kann auch in der Ladedruckleitung ein Drucksensor vorgesehen werden, dessen Signale einem die Bremsklappe steuernden Steuergerät zugeführt werden, wobei bevorzugt die Signale der beiden Drucksensoren im Abgastrakt und in der Ladedruckleitung im Steuergerät zur Einsteuerung einer definierten Druckdifferenz logisch verknüpft werden. Es werden somit die Druckwerte stromauf und stromab des Motorbrennraums verglichen und die Bremsklappe zur Einstellung eines definierten Druckgefälles entsprechend angesteuert.

Alternativ zu dem Drucksensor im Abgastrakt oder bevorzugt zusätzlich dazu kann die Bremsklappe im befeuerten Betrieb abhängig von Betriebsparametern der Brennkraftmaschine und/oder von Vorgaben eines Fahrzeugführungsrechners gesteuert werden. Dabei ist von Vorteil, dass die dazu erforderlichen Daten in einem Motorsteuergerät und/oder in einem Fahrzeugführungsrechner ohnehin bereits erfasst sind und nur einer die Bremsklappe im befeuerten Betrieb mit einzubeziehenden Modifikation bedürfen.

So kann in dem Motorsteuergerät nach Maßgabe dieser Daten ein Kennfeld zur Steuerung der Bremsklappe abgelegt und die Bremsklappe entsprechend gesteuert werden. Insbesondere können als Betriebsparameter zur Steuerung der Bremsklappe unter anderem Temperaturen der Brennkraftmaschine, die Einspritzmenge an Kraftstoff, die Drehzahl der Brennkraftmaschine und deren Lastzustand erfasst und im Motorsteuergerät regelungstechnisch so verarbeitet werden, dass sowohl eine definierte Abgasrückführrate als auch gegebenenfalls eine schnelle Aufheizung der Brennkraftmaschine verwirklichbar ist. In die Bremsklappensteuerung können ferner über den Fahrzeugführungsrechner unter anderem die Gaspedalstellung und/oder der eingelegte Gang im Wechselgetriebe und/oder ein Fahrerbefehl erfasst und zur Steuerung der Bremsklappe herangezogen werden.

Insbesondere zur Durchführung des vorstehenden Verfahrens wird ferner eine Vorrichtung vorgeschlagen, bei der die im Abgastrakt angeordnete Bremsklappe stromauf der Abgasturbine des Abgasturboladers angeordnet ist, die über ein Motorsteuergerät auch im befeuerten Betrieb der Brennkraftmaschine zur Einsteuerung eines definierten Abgasgegendrucks betätigbar ist. Die Betätigung der Bremsklappe kann dabei pneumatisch, hydraulisch oder besonders bevorzugt elektrisch über einen entsprechenden Stellmotor erfolgen.

Ferner kann die Brennkraftmaschine eine Registeraufladung mit einem Hochdruckturbolader und einem Niederdruckturbolader aufweisen, wobei die Bremsklappe bevorzugt stromauf der Abgasturbine des Hochdruckturboladers in den Abgastrakt eingesetzt ist.

Des Weiteren können bei einer Brennkraftmaschine mit mehreren Zylindern zwei Abgaskrümmer mit bis zur Abgasturbine getrennt geführten Abgasfluten vorgesehen und in beiden Abgasfluten je eine Bremsklappe eingesetzt sein, die bevorzugt synchron über einen Stellmotor betätigbar sind. Dazu können entweder in beiden Abgasfluten je ein Drucksensor oder über eine Verbindungsleitung nur ein Drucksensor für beide Abgasfluten verwendet sein.

Weiterhin können von den beiden Abgasfluten stromauf der Bremsklappen je eine Abgasrückführleitung mit je einem integrierten Abgasrückführventil abzweigen, die in zumindest einem Abgaskühler zusammengeführt und an die Ladedruckleitung angeschlossen sind. Über die separaten Abgasrückführleitungen mit integrierten Abgasrückführventilen (zum Beispiel elektrisch angesteuerten Taktventilen) kann eine noch präzisere Steuerung der jeweiligen Abgasrückführrate verwirklicht werden.

Gegebenenfalls kann zu einer noch verfeinerten Steuerung der Abgasrückführrate ein Drucksensor in der Ladedruckleitung stromab eines Mittels zur Beeinflussung des Ladedruckes angeordnet sein. Das Mittel kann zum Beispiel eine gesteuerte Umluftleitung von der Ladedruckleitung zum Abgastrakt stromab der Bremsklappe sein. Bevorzugt kann jedoch ein an sich bekanntes Drosselventil bzw. eine Drosselklappe verwendet sein.

Schließlich können zumindest in der Abgasrückführleitung und/oder in der Ladedruckleitung Temperatursensoren eingesetzt sein, die an das Motorsteuergerät zur Steuerung der Bremsklappen bzw. zur indirekten Beeinflussung der Abgasrückführung angeschlossen sind und die zum Beispiel bei zu hohen Temperaturwerten zu einer Verringerung des Abgasgegendrucks durch Aufsteuern der Bremsklappe mit beitragen.

Ein Ausführungsbeispiel der Erfindung ist im Folgenden anhand eines beigefügten Blockschaltbilds einer Viertakt-Brennkraftmaschine mit Abgasturboaufladung, einer Motorbremseinrichtung mit einer Bremsklappe und mit einer Abgasrückführeinrichtung näher beschrieben.

Das Blockschaltbild zeigt hier beispielhaft eine selbstzündende Sechszylinder-Viertakt-Brennkraftmaschine 1 für Nutzkraftfahrzeuge, die nur soweit dargestellt ist, als dies für das Verständnis der vorliegenden Erfindung erforderlich ist. Soweit nicht beschrieben kann die Brennkraftmaschine 1 bekannter Bauart sein.

Die Brennkraftmaschine 1 wird über einen Niederdruck-Abgasturbolader 2 und einen Hochdruck-Abgasturbolader 3 aufgeladen, wobei die hintereinander geschalteten Verdichter 2a und 3a Verbrennungsluft über Ladeluftkühler 4, 5 und eine Ladedruckleitung 6 zur Brennkraftmaschine 1 fördern.

Angetrieben sind die Verdichter 2a und 3a über die Abgasturbinen 2b und 3b, die in einen Abgastrakt der Brennkraftmaschine 1 eingeschaltet sind. Gegebenenfalls vorhandene Bypasseinrichtungen zur Ladedruckregelung sind nicht dargestellt.

Der Abgastrakt setzt sich soweit dargestellt aus zwei Abgaskrümmern 7, 8, zwei getrennt bis zur Hochdruck-Abgasturbine 3b geführten Abgasleitungen 9, 10, einer weiterführenden Abgasleitung 11 und einer nachgeschalteten Abgasnachbehandlungseinrichtung 12, wie zum Beispiel einem Oxydationskatalysator und/oder einem Dieselpartikelfilter, zusammen. Der weitere Abgastrakt ist nicht dargestellt.

Von den Abgasleitungen 9 und 10 zweigen zwei Abgasrückführleitungen 13, 14 ab, in die zwei Abgasrückführventile 15 (nur angedeutet, zum Beispiel elektrische Taktventile) und in der weiterführenden Abgasrückführleitung 16 zwei Abgaskühler 17 eingeschaltet sind. Die gemeinsame Abgasrückführleitung16 ist an die Ladedruckleitung 6 stromab eines als steuerbare Drosselklappe 18 ausgeführten Drosselventils angeschlossen.

In den Abgastrakt sind in die beiden Abgasleitungen 9, 10 (oder alternativ direkt in die Abgaskrümmer 7, 8) stromauf der Abgasturbine 3b je eine über einen elektrischen Stellmotor 19 gemeinsam betätigbare Bremsklappe 20 einer noch zu beschreibenden Motorbremse für ein Nutzkraftfahrzeug eingesetzt, die abhängig von einem elektronischen Motorsteuergerät 21 und einem Fahrzeugführungsrechner 22 gesteuert bzw. geregelt ist.

Der Gaswechsel der Brennkraftmaschine 1 wird über Einlassventile und Auslassventile einer Ventilsteuerung (nicht dargestellt) gesteuert, die zusätzlich eine an sich bekannte EVB-Funktion aufweist, bei der wie eingangs ausgeführt, bei hohem Abgasgegendruck ein Zwischenöffnen der Auslassventile initiiert und durch Eingriff in die Ventilsteuerung gehalten wird.

Die Motorbremsung durch Schließen der Bremsklappen 20 und anschließender EVB Funktion wird über den Fahrzeugführungsrechner 22, zum Beispiel durch einen fahrerseitigen Bremsbefehl und über das Motorsteuergerät 21 ausgelöst und erfolgt in an sich bekannter Weise, wobei die Kraftstoffzufuhr über die nicht dargestellte Kraftstoffeinspritzanlage unterbrochen ist.

Liegt ein Bremssignal für eine Motorbremsung nicht vor und ist die Brennkraftmaschine 1 befeuert (nach Betriebsdaten der Brennkraftmaschine 1 über das Motorsteuergerät 21 mit Kraftstoff versorgt), so werden die Bremsklappen 20 über den Stellmotor 19 in ihrer Klappenstellung über das Motorsteuergerät 21 so geregelt, dass bei Bedarf ein definierter Abgasgegendruck erzeugt wird, der entweder bei kalter Brennkraftmaschine 1 ein schnelleres Aufheizen auf Betriebstemperatur oder bei betriebswarmer Brennkraftmaschine 1 eine gezielte Abgasrückführrate über die Abgasrückführventile 15 einstellbar ist.

Dazu ist zunächst in einer Verbindungsleitung 23 zwischen den Abgasleitungen 9, 10 stromauf der Bremsklappen 20 ein Drucksensor 24 eingesetzt, der den Ist-Abgasgegendruck ständig erfasst und der mit dem Motorsteuergerät 21 signaltechnisch verbunden ist. Ein weiterer Drucksensor 24 ist in der Ladedruckleitung 6 stromab der Drosselklappe 18 vorgesehen. Mittels der beiden Drucksensoren 24 kann in dem Motorsteuergerät 21 die jeweilige Druckdifferenz erfasst und über den Stellmotor 19 auf definierte Sollwerte eingestellt werden.

Ferner sind in der gemeinsamen Abgasrückführleitung 16, in der Ladedruckleitung 6 stromab des Drosselventils 18 und in dem Ansaugverteiler 25 einheitlich mit dem Bezugszeichen 26 bezeichnete Temperatursensoren eingesetzt, die ebenfalls signaltechnisch an das Motorsteuergerät 21 angeschlossen sind.

In dem Motorsteuergerät 21 ist ein Kennfeld zur Steuerung der Bremsklappen 20 über den Stellmotor 19 bei befeuertem Betrieb der Brennkraftmaschine 1 abgelegt, dass nach Maßgabe der motorspezifischen Daten wie Motordrehzahl, Lastzustand, Einspritzmenge an Kraftstoff, diverse Temperaturen mit Einbeziehung der Temperatursensoren 26, den Druckwerten der Drucksensoren 24 im Abgastrakt 9, 10 und in der Ladedruckleitung 6, sowie nach Daten des Fahrzeugführungsrechners 22 wie Gaspedalstellung, momentan eingelegter Getriebegang, etc. die zur Abgasrückführung und/oder beschleunigte Aufheizung der Brennkraftmaschine 1 optimale Position angibt. Der Abgasgegendruck wird dabei stets unterhalb einer vorgegebenen Druckschwelle gehalten, die ausschließt, dass die EVB-Funktion initiiert wird.

In das Motorsteuergerät 21 ist ferner eine Motorschutzfunktion integriert, die im Falle eines trotz voll geöffneter Bremsklappen 20 unzulässig hohen Abgasgegendrucks den Ladedruck in der Ladedruckleitung 6 durch Ansteuerung des Drosselventils 18 verringert und/oder durch Verringerung der Einspritzmenge an Kraftstoff die Leistung der Brennkraftmaschine 1 zurückfährt. Gegebenenfalls könnten auch im Abgastrakt vorgesehene Bypassventile (waste gate) zur Absenkung des Ladedrucks geöffnet werden.

Die Erfindung ist nicht auf das dargestellte Ausführungsbeispiel beschränkt. Anstelle der Registeraufladung über die Abgasturbolader 2 und 3 könnte auch eine Einfachaufladung mit nur einem Abgasturbolader oder gegebenenfalls mit einem Abgasturbolader mit variabler Turbinengeometrie und gegebenenfalls nur einer Abgasflut vorgesehen sein.

Ferner kann es ausreichen, die Abgasrückführrate über die Abgasrückführventile 15 nur durch die Bremsklappen 20 bzw. den erhöhten Abgasgegendruck zu definieren, so dass das Drosselventil 18 in der Ladedruckleitung 6 entfallen kann.

Die Betätigung der Bremsklappen 20 im befeuerten Betrieb der Brennkraftmaschine 1 kann vereinfacht nur über die Drucksensoren 24 oder nur über ein im Motorsteuergerät 21 nach Betriebsdaten der Brennkraftmaschine 1 abgelegtes Kennfeld gesteuert werden.

### Bezugszeichenliste

- 1: Brennkraftmaschine
- 2: Niederdruck-Abgasturbolader
- 2a: Verdichter
- 2b: Abgasturbine
- 3: Hochdruck-Abgasturbolader
- 3a: Verdichter
- 3b: Abgasturbine
- 4: Ladeluftkühler
- 5: Ladeluftkühler
- 6: Ladedruckleitung
- 7: Abgaskrümmer
- 8: Abgaskrümmer
- 9: Abgasleitung
- 10: Abgasleitung
- 11: Abgasleitung
- 12: Abgasnachbehandlungseinrichtung
- 13: Abgasrückführleitung
- 14: Abgasrückführleitung
- 15: Abgasrückführventile
- 16: Abgasrückführleitung
- 18: Drosselklappe
- 19: Stellmotor
- 20: Bremsklappen
- 21: Motorsteuergerät
- 22: Fahrzeugführungsrechner
- 23: Verbindungsleitung
- 24: Drucksensoren
- 25: Ansaugverteiler
- 26: Temperatursensoren

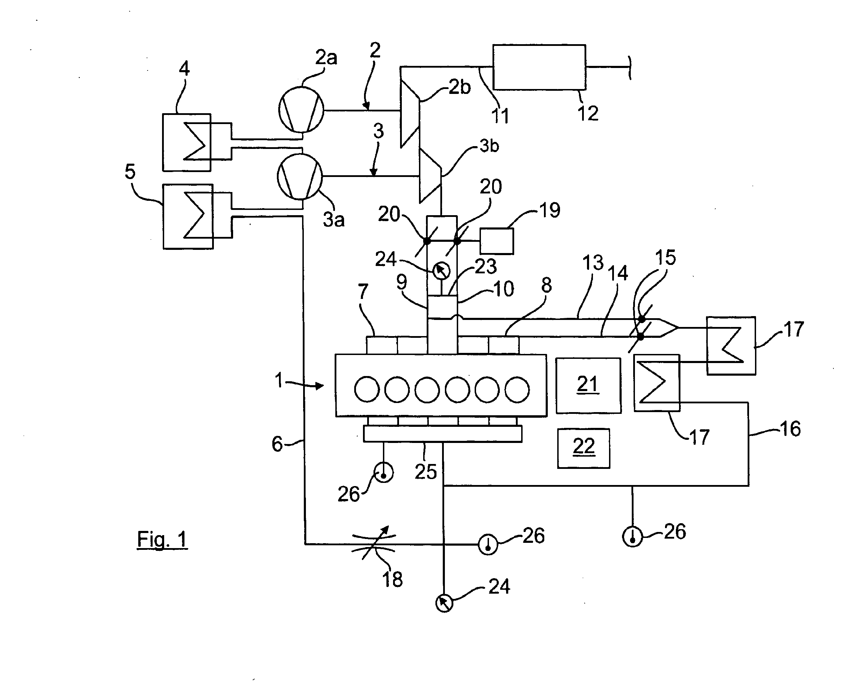

## Patentansprüche

1. Verfahren zum Steuern zumindest einer Bremsklappe (20) im Abgastrakt einer über zumindest einen Abgasturbolader (2, 3) aufgeladenen Brennkraftmaschine (1), insbesondere einer Viertakt-Brennkraftmaschine, insbesondere für Nutzkraftfahrzeuge, mit zumindest einem Zylinder und einer Ventilsteuerung mit einer Zusatzbremsfunktion, bei der das zumindest eine Auslassventil bei einem über die Bremsklappe (20) erzeugten Abgasgegendruck in Zwischenöffnungsstellungen überführbar ist, sowie mit einer an den Verdichter (2a, 3a) des Abgasturboladers (2, 3) angeschlossenen Ladedruckleitung (6), an die ferner eine mit dem Abgastrakt stromauf der Bremsklappe (20) verbundene, über ein Abgasrückführventil (15) gesteuerte Abgasrückführleitung (13, 14, 16) angeschlossen ist, wobei die Bremsklappe (20) auch im befeuerten Betrieb der Brennkraftmaschine (1) zur definierten Erhöhung des Abgasgegendrucks in einer vorgegebenen Weise angesteuert wird, **dadurch gekennzeichnet, dass** der Abgasgegendruck im befeuerten Betrieb der Brennkraftmaschine (1) stets unterhalb eines Schwellwerts gehalten wird, der ein Ansprechen der Zusatzbremsvorrichtung (EVB) ausschließt.

2. Verfahren nach Anspruch 1, **dadurch gekennzeichnet, dass** die zumindest eine Bremsklappe (20) stromauf der Turbine (2b, 3b) des zumindest einen Abgasturboladers (2, 3) angeordnet wird.

3. Verfahren nach Anspruch 1 oder 2, **dadurch gekennzeichnet, dass** stromauf der Bremsklappe (20) ein Drucksensor (24) im Abgastrakt (9, 10) vorgesehen wird, dessen Signale einem die Bremsklappe (20) steuernden Steuergerät (21) zugeführt werden, wobei bevorzugt vorgesehen ist, dass bei zu hohem Abgasgegendruck trotz geöffneter Bremsklappe (20) eine Reduzierung des Ladedrucks und/oder eine Reduzierung der Kraftstoff-Einspritzmenge gesteuert wird.

4. Verfahren nach einem der vorhergehenden Ansprüche, **dadurch gekennzeichnet, dass** in der Ladedruckleitung (6) ein Drucksensor (24) vorgesehen wird, dessen Signale einem die Bremsklappe (20) steuernden Steuergerät (21) zugeführt werden.

5. Verfahren nach Anspruch 3 und 4, **dadurch gekennzeichnet, dass** die Signale der beiden Drucksensoren (24) im Abgastrakt (9, 10) und in der Ladedruckleitung (6) im Steuergerät (21) zur Einsteuerung einer definierten Druckdifferenz logisch verknüpft werden.

6. Verfahren nach einem der vorhergehenden Ansprüche, **dadurch gekennzeichnet, dass** die Bremsklappe (20) im befeuerten Betrieb abhängig von Betriebsparametern der Brennkraftmaschine (1) und/oder von Vorgaben eines Fahrzeugführungsrechners (22) gesteuert wird.

7. Verfahren nach Anspruch 6, **dadurch gekennzeichnet, dass** in einem Motorsteuergerät (21) nach Maßgabe dieser Daten ein Kennfeld zur Steuerung der Bremsklappe (20) abgelegt und die Bremsklappe (20) entsprechend gesteuert wird, und/oder dass als Betriebsparameter zur Steuerung der Bremsklappe (20) definierte Temperaturen, und/oder die Einspritzmenge an Kraftstoff und/oder die Drehzahl der Brennkraftmaschine und/oder der Lastzustand der Brennkraftmaschine erfasst und im Motorsteuergerät (21) regelungstechnisch verarbeitet wird oder werden.

8. Verfahren nach Anspruch 6, **dadurch gekennzeichnet, dass** über den Fahrzeugführungsrechner die Gaspedalstellung und/oder der eingelegte Gang im Wechselgetriebe und/oder ein Fahrerbefehl erfasst und zur Steuerung der Bremsklappe (20) herangezogen wird oder werden.

9. Vorrichtung zur Durchführung eines Verfahrens nach einem der vorgehrgehenden Ansprüche zum Steuern zumindest einer Bremsklappe (20) im Abgastrakt, umfassend eine mit der Bremsklappe (20) im Abgastrakt versehene über zumindest einen Abgasturbolader (2, 3) aufgeladene Brennkraftmaschine (1), insbesondere eine Viertakt-Brennkraftmaschine, insbesondere für Nutzkraftfahrzeuge, mit zumindest einem Zylinder und einer Ventilsteuerung mit einer Zusatzbremsfunktion, bei der das zumindest eine Auslassventil bei einem über die Bremsklappe (20) erzeugten Abgasgegendruck in Zwischenöffnungsstellungen überführbar ist, sowie mit einer an den Verdichter (2a, 3a) des Abgasturboladers (2, 3) angeschlossenen Ladedruckleitung (6), an die ferner eine mit dem Abgastrakt stromauf der Bremsklappe (20) verbundene, über ein Abgasrückführventil (15) gesteuerte Abgasrückführleitung (13, 14, 16) angeschlossen ist, wobei die Bremsklappe (20) stromauf der Abgasturbine (2b, 3b) des Abgasturboladers (2, 3) im Abgastrakt (9, 10) angeordnet ist und über ein Motorsteuergerät (21) auch im befeuerten Betrieb der Brennkraftmaschine (1) zur Einsteuerung eines definierten Abgasgegendrucks betätigbar ist, **dadurch gekennzeichnet, dass** der Abgasgegendruck über das Motorsteuergerät im befeuerten Betrieb der Brennkraftmaschine (1) stets unterhalb eines Schwellwerts gehalten wird, der ein Ansprechen der Zusatzbremsfunktion ausschließt.

10. Vorrichtung nach Anspruch 9, **dadurch gekennzeichnet, dass** die Betätigung der Bremsklappe (20) pneumatisch, hydraulisch oder bevorzugt elektrisch über einen entsprechenden Stellmotor (19) erfolgt.

11. Vorrichtung nach Anspruch 9 oder 10, **dadurch gekennzeichnet, dass** die Brennkraftmaschine (1) eine Registeraufladung mit einem Hochdruckturbolader (3) und einem Niederdruckturbolader (2) aufweist und dass die Bremsklappe (20) stromauf der Abgasturbine (3b) des Hochdruckturboladers (3) in den Abgastrakt (9, 10) eingesetzt ist.

12. Vorrichtung nach einem der Ansprüche 9 bis 11, **dadurch gekennzeichnet, dass** bei einer Brennkraftmaschine (1) mit mehreren Zylindern zwei Abgaskrümmer (7, 8) mit bis zur Abgasturbine (3b) geführten Abgasleitungen (9, 10) vorgesehen sind und dass in beiden Abgasleitungen (9, 10) je eine Bremsklappe (20) eingesetzt ist, wobei bevorzugt vorgesehen ist, dass von beiden Abgasleitungen (9, 10) stromauf der Bremsklappen (20) je eine Abgasrückführleitung (13, 14) mit je einem integrierten Abgasrückführventil (15) abzweigt, die in zumindest einem Abgaskühler (17) zusammengeführt und an die Ladedruckleitung (6) angeschlossen sind.

13. Vorrichtung nach einem der Ansprüche 9 bis 12, **dadurch gekennzeichnet, dass** im Abgastrakt (9, 10) stromauf der Bremsklappen (20) und/oder in der Ladedruckleitung (6) ein Drucksensor (24) eingesetzt ist.

14. Vorrichtung nach Anspruch 13, **dadurch gekennzeichnet, dass** der Drucksensor (24) in der Ladedruckleitung (6) stromab eines Mittels (18) zur Beeinflussung des Ladedruckes angeordnet ist, wobei bevorzugt vorgesehen ist, dass das Mittel zur Beeinflussung des Ladedrucks ein steuerbares Drosselventil (18) ist.

15. Vorrichtung nach einem der Ansprüche 9 bis 14, **dadurch gekennzeichnet, dass** zumindest in der Abgasrückführleitung (16) und/oder in der Ladedruckleitung (6) und/oder in dem Ansaugverteiler (25) wenigstens ein Temperatursensor (26) eingesetzt ist, der an das Motorsteuergerät (21) zur Steuerung der Bremsklappen (20) angeschlossen ist.

## Claims

1. A method for controlling at least one brake valve (20) in the exhaust tract of an internal combustion engine (1) which is charged via at least one exhaust turbocharger (2, 3), in particular a four-stroke internal combustion engine, in particular for trucks, with at least one cylinder and a valve control with an additional brake function, wherein when an exhaust gas back-pressure is created via the brake valve (20), the at least one exhaust valve can be transferred into intermediate opening positions, and with a charge pressure line (6) which is connected to the compressor (2a, 3a) of the exhaust turbocharger (2, 3) and to which furthermore is connected an exhaust gas recirculation line (13, 14, 16) which is controlled via an exhaust gas recirculation valve (15) and connected with the exhaust tract upstream of the brake valve (20), wherein even when the internal combustion engine (1) is in operating mode, the brake valve (20) is controlled in a predefined manner for a defined increase in exhaust gas back-pressure, **characterised in that** the exhaust gas back-pressure when the internal combustion engine (1) is in operating mode is always held below a threshold value which excludes a response of the additional brake device (EVB).

2. The method according to claim 1, **characterised in that** the at least one brake valve (20) is arranged upstream of the turbine (2b, 3b) of the at least one exhaust turbocharger (2, 3).

3. The method according to claim 1 or 2 **characterised in that** a pressure sensor (24) is provided upstream of the brake valve (20) in the exhaust tract (9, 10), the signals from which sensor are supplied to a control unit (21) controlling the brake valve (20), wherein preferably it is provided that when the exhaust gas back-pressure is too high, despite the opened brake valve (20), a reduction in charge pressure and/or a reduction in fuel injection quantity is carried out.

4. The method according to any of the preceding claims, **characterised in that** a pressure sensor (24) is provided in the charge pressure line (6), the signals from which sensor are supplied to a control unit (21) controlling the brake valve (20).

5. The method according to claim 3 and 4, **characterised in that** the signals from the two pressure sensors (24) in the exhaust tract (9, 10) and in the charge pressure line (6) are linked together logically in the control unit (21) to set a defined pressure difference.

6. The method according to any of the preceding claims, **characterised in that** in operating mode, the brake valve (20) is controlled depending on operating parameters of the internal combustion engine (1) and/or on predefined values from a vehicle management computer (22).

7. The method according to claim 6, **characterised in that** according to these data, a map is stored in an engine control unit (21) for controlling the brake valve (20) and the brake valve (20) is controlled accordingly, and/or that as operating parameters for controlling the brake valve (20), defined temperatures and/or the fuel injection quantity and/or the rotation speed of the internal combustion engine and/or the load state of the internal combustion engine is/are detected and processed for regulation in the engine control unit (21).

8. The method according to claim 6, **characterised in that** via the vehicle management computer, the gas pedal position and/or the gear engaged in the shift gearbox and/or a driver command is/are detected and used to control the brake valve (20).

9. A device for performance of a method according to any of the preceding claims for controlling at least one brake valve (20) in the exhaust tract, comprising an internal combustion engine (1) which is provided with the brake valve (20) in the exhaust tract and is charged via at least one exhaust turbocharger (2, 3), in particular a four-stroke internal combustion engine, in particular for trucks, with at least one cylinder and a valve control with an additional brake function, wherein when an exhaust gas back-pressure is created via the brake valve (20), the at least one exhaust valve can be transferred into intermediate opening positions, and with a charge pressure line (6) which is connected to the compressor (2a, 3a) of the exhaust turbocharger (2, 3) and to which furthermore is connected an exhaust gas recirculation line (13, 14, 16) which is controlled via an exhaust gas recirculation valve (15) and connected with the exhaust tract upstream of the brake valve (20), wherein the brake valve (20) is arranged upstream of the exhaust turbine (2b, 3b) of the exhaust turbocharger (2, 3) in the exhaust tract (9, 10) and can be activated via an engine control unit (21) to set a defined exhaust back-pressure even when the internal combustion engine (1) is in operating mode, **characterised in that** the exhaust gas back-pressure when the internal combustion engine (1) is in operating mode is always via the engine control device, held below a threshold value which precludes a response of the additional brake function.

10. The device according to claim 9, **characterised in that** the brake valve (20) is activated pneumatically, hydraulically or preferably electrically via a corresponding servomotor (19).

11. The device according to claim 9 or 10, **characterised in that** the internal combustion engine (1) has a multistage charging with a high pressure turbocharger (3) and a low pressure turbocharger (2), and that the brake valve (20) is fitted in the exhaust tract (9, 10) upstream of the exhaust turbine (3b) of the high pressure turbocharger (3).

12. The device according to any of claims 9 to 11, **characterised in that** in an internal combustion engine (1) with several cylinders, two exhaust manifolds (7, 8) are provided with exhaust lines (9, 10) guided as far as the exhaust turbine (3b), and that a brake valve (20) is fitted in each exhaust line (9, 10), wherein it is preferably provided that upstream of the brake valves (20) an exhaust gas recirculation line (13, 14) with an integral exhaust gas recirculation valve (15) branches from each of the two exhaust lines (9, 10) and these merge in at least one exhaust cooler (17) and are connected to the charge pressure line (6).

13. The device according to any of claims 9 to 12, **characterised in that** a pressure sensor (24) is fitted in the exhaust tract (9, 10) upstream of the brake valves (20) and/or in the charge pressure line (6).

14. The device according to claim 13, **characterised in that** the pressure sensor (24) is arranged in the charge pressure line (6) downstream of a means (18) for influencing the charge pressure, wherein it is preferably provided that the means for influencing the charge pressure is a controllable throttle valve (18).

15. The device according to any of claims 9 to 14, **characterised in that** at least one temperature sensor (26) is fitted at least in the exhaust gas recirculation line (16) and/or in the charge pressure line (6) and/or in the intake distributor (25) and is connected to the engine control unit (21) for controlling the brake valves (20).

## Revendications

1. Procédé destiné à la commande d'au moins un volet de freinage (20) dans le système d'échappement d'un moteur à combustion interne (1), en particulier d'un moteur à combustion interne à quatre temps, en particulier pour véhicules utilitaires, suralimenté par le biais d'au moins un turbocompresseur à gaz d'échappement (2, 3), comprenant au moins un cylindre et une commande de soupapes avec une fonction de freinage supplémentaire, dans lequel l'au moins une soupape d'échappement peut être transférée à des positions d'ouverture intermédiaires en cas de contre-pression des gaz d'échappement générée par le biais du volet de freinage (20), et comprenant une conduite de pression de suralimentation (6) raccordée au compresseur (2a, 3a) du turbocompresseur à gaz d'échappement (2, 3), à laquelle est raccordée en outre une conduite de recirculation des gaz d'échappement (13, 14, 16) commandée par le biais d'une soupape de recirculation des gaz d'échappement (15) et reliée au système d'échappement en amont du volet de freinage (20), le volet de freinage (20) étant commandé d'une manière prédéfinie également en mode de fonctionnement du moteur à combustion interne (1) en vue d'une augmentation définie de la contre-pression des gaz d'échappement, **caractérisé en ce qu'**en mode de fonctionnement du moteur à combustion interne (1), la contre-pression des gaz d'échappement est maintenue constamment en dessous d'une valeur seuil qui exclut une réponse du dispositif de freinage supplémentaire (EVB).

2. Procédé selon la revendication 1, **caractérisé en ce que** l'au moins un volet de freinage (20) est disposé en amont de la turbine (2b, 3b) de l'au moins un turbocompresseur à gaz d'échappement (2, 3).

3. Procédé selon la revendication 1 ou 2, **caractérisé en ce qu'**un capteur de pression (24) est prévu en amont du volet de freinage (20) dans le système d'échappement (9, 10), les signaux du capteur de pression étant acheminés à un appareil de commande (21) commandant le volet de freinage (20), une réduction de la pression de suralimentation et/ou une réduction de la quantité d'injection de carburant étant de préférence prévues de manière à être commandées en cas de contre-pression trop élevée des gaz d'échappement malgré le fait que le volet de freinage (20) est ouvert.

4. Procédé selon l'une quelconque des revendications précédentes, **caractérisé en ce qu'**un capteur de pression (24) est prévu dans la conduite de pression de suralimentation (6), les signaux du capteur de pression étant acheminés à un appareil de commande (21) commandant le volet de freinage (20).

5. Procédé selon les revendications 3 et 4, **caractérisé en ce que** les signaux des deux capteurs de pression (24) dans le système d'échappement (9, 10) et dans la conduite de pression de suralimentation (6) sont combinés logiquement dans l'appareil de commande (21) pour régler une différence de pression définie.

6. Procédé selon l'une quelconque des revendications précédentes, **caractérisé en ce que** le volet de freinage (20) est commandé en mode de fonctionnement en fonction de paramètres de fonctionnement du moteur à combustion interne (1) et/ou de consignes d'un calculateur de conduite du véhicule (22).

7. Procédé selon la revendication 6, **caractérisé en ce qu'**une cartographie pour la commande du volet de freinage (20) est mise en mémoire dans un appareil de commande de moteur (21) conformément à ces données et le volet de freinage (20) est commandé de manière correspondante, et/ou **en ce qu'**en tant que paramètres de fonctionnement pour la commande du volet de freinage (20), des températures définies et/ou la quantité d'injection de carburant et/ou le régime du moteur à combustion interne et/ou l'état de charge du moteur à combustion interne est/sont détecté(e)(s) et traité(e)(s) par une technique de régulation dans l'appareil de commande de moteur (21).

8. Procédé selon la revendication 6, **caractérisé en ce que**, par le biais du calculateur de conduite du véhicule, la position de la pédale des gaz et/ou le rapport enclenché dans la boîte de vitesses et/ou un ordre du conducteur sont détecté(e)(s) et utilisé(e) (s) pour la commande du volet de freinage (20).

9. Dispositif pour mettre en oeuvre un procédé selon l'une quelconque des revendications précédentes destiné à la commande d'au moins un volet de freinage (20) dans le système d'échappement, comportant un moteur à combustion interne (1), en particulier un moteur à combustion interne à quatre temps, en particulier pour véhicules utilitaires, suralimenté par le biais d'au moins un turbocompresseur à gaz d'échappement (2, 3), comprenant au moins un cylindre et une commande de soupapes avec une fonction de freinage supplémentaire, dans lequel l'au moins une soupape d'échappement peut être transférée à des positions d'ouverture intermédiaires en cas de contre-pression des gaz d'échappement générée par le biais du volet de freinage (20), et comprenant une conduite de pression de suralimentation (6) raccordée au compresseur (2a, 3a) du turbocompresseur à gaz d'échappement (2, 3), à laquelle est raccordée en outre une conduite de recirculation des gaz d'échappement (13, 14, 16) commandée par le biais d'une soupape de recirculation des gaz d'échappement (15) et reliée au système d'échappement en amont du volet de freinage (20), le volet de freinage (20) étant disposé dans le système d'échappement (9, 10) en amont de la turbine à gaz (2b, 3b) du turbocompresseur à gaz d'échappement (2, 3) et pouvant être actionné également en mode de fonctionnement du moteur à combustion interne (1) en vue du réglage d'une contre-pression définie des gaz d'échappement, **caractérisé en ce qu'**en mode de fonctionnement du moteur à combustion interne (1), la contre-pression des gaz d'échappement est maintenue, par le biais de l'appareil de commande de moteur, constamment en dessous d'une valeur seuil qui exclut une réponse du dispositif de freinage supplémentaire.

10. Dispositif selon la revendication 9, **caractérisé en ce que** l'actionnement du volet de freinage (20) s'effectue de manière pneumatique, de manière hydraulique ou de préférence de manière électrique par le biais d'un moteur de réglage (19) correspondant.

11. Dispositif selon la revendication 9 ou 10, **caractérisé en ce que** le moteur à combustion interne (1) présente une suralimentation à plusieurs étages comprenant un turbocompresseur à haute pression (3) et un turbocompresseur à basse pression (2) et **en ce que** le volet de freinage (20) est placé dans le système d'échappement (9, 10) en amont de la turbine à gaz d'échappement (3b) du turbocompresseur à haute pression (3).

12. Dispositif selon l'une quelconque des revendications 9 à 11, **caractérisé en ce qu'**en cas de moteur à combustion interne (1) comprenant plusieurs cylindres, deux collecteurs d'échappement (7, 8) avec des conduites d'échappement (9, 10) guidées jusqu'à la turbine à gaz d'échappement (3b) sont prévus, et **en ce qu'**un volet de freinage (20) respectif est placé dans les deux conduites d'échappement (9, 10), une conduite de recirculation des gaz d'échappement (13, 14) respective comprenant une soupape intégrée respective de recirculation des gaz d'échappement (15) étant de préférence prévue de manière à bifurquer à partir des deux conduites d'échappement (9, 10) en amont des volets de freinage (20), lesquelles conduites de recirculation des gaz d'échappement sont réunies dans au moins un refroidisseur de gaz d'échappement (17) et raccordées à la conduite de pression de suralimentation (6).

13. Dispositif selon l'une quelconque des revendications 9 à 12, **caractérisé en ce qu'**un capteur de pression (24) est placé dans le système d'échappement (9, 10) en amont des volets de freinage (20) et/ou dans la conduite de pression de suralimentation (6).

14. Dispositif selon la revendication 13, **caractérisé en ce que** le capteur de pression (24) dans la conduite de pression de suralimentation (6) est disposé en aval d'un moyen (18) pour influencer la pression de suralimentation, le moyen pour influencer la pression de suralimentation étant de préférence prévu de manière à être une soupape d'étranglement commandable (18).

15. Dispositif selon l'une quelconque des revendications 9 à 14, **caractérisé en ce qu'**au moins un capteur de température (26) est placé au moins dans la conduite de recirculation des gaz d'échappement (16) et/ou dans la conduite de pression de suralimentation (6) et/ou dans le répartiteur d'admission (25), lequel capteur de température est connecté à l'appareil de commande de moteur (21) pour la commande des volets de freinage (20).
